# EUROPEAN PATENT APPLICATION

(11) **EP 0 599 370 A1**
(43) Date of publication of application: **01.06.1994**
(21) Application number: 93203144.6
(22) Date of filing: 11.11.1993
(51) Int. Cl.: A61C 17/26, F16H 19/08

(54) **Method converting mechanism for electric toothbrush and toothbrush comprising such mechanism**

(30) Priority: 18.11.1992 JP 332327/92
(71) Applicant: Philips Electronics N.V., 5621 BA Eindhoven (NL)
(72) Inventor: Krammer, Erich, c/o Int.Octrooibureau B.V., NL-5656 AA Eindhoven (NL)
(74) Representative: Bos, Kornelis Sjoerd

(57) **Abstract**

A motion converting mechanism for a toothbrush comprises an output wheel (17) for driving a drive shaft (9), a first control wheel (15) and a second control wheel (16), which control wheels rotate in opposite directions to enable the output wheel to be rotated alternately in different directions. The output wheel (17) has two pairs of recesses and the first control wheel (15) and the second control wheel (16) each carry one pair of pins. A reversing motion of the output wheel (17) is obtained in such a way that the two pairs of pins on the first and the second control wheel (15) and (16), respectively, alternately engage with and are disengaged from one pair of recesses and the other pair of recesses in the output wheel (17).

## Description

The invention relates to a motion converting mechanism for a electric toothbrush. The mechanism particularly serves for converting a rotation of a motor which produces a driving torque into a reversing motion of the brush head.

It has been found that brushing teeth with a electric toothbrush is effective in preventing pyorrhoea and gingivitis. The vibration speed of a brush head in a electric toothbrush is between ten and some tens of times as high as that of a non-electric toothbrush. Therefore, as compared with a non-electric toothbrush, a electric toothbrush is capable of providing a higher brushing efficiency in a shorter time.

The brush head in a electric toothbrush may have, for example, a round shape. With a electric toothbrush having a round brush head teeth are brushed with a reciprocating rotation of the brush head. An improved brushing efficiency of a electric toothbrush requires a high vibration or reversing rate and a large vibration or reversing angle. The high reversing rate can be obtained easily by, for example, increasing the motor speed etc. However, enlarging the reversing angle poses a greater problem. Herein, the term reversing angle is to be understood to mean a given angle through which a brush head rotates in one direction and subsequently in the opposite direction.

Generally, a driving torque produced by a motor is transmitted to a free end of a electric toothbrush *via* drive shaft. Gear wheels at this free end mesh with each other to transmit the driving torque from the drive shaft to a spindle of a brush head. The desired reversing angle of a brush head can be obtained by a appropriate choice of the gear ratio. Thus, with a large gear ratio a brush head can be perform a reversing motion with a reversing angle larger than that of a drive shaft. However, for a large gear ratio a large gear wheel is required, which leads to a large free end portion of the electric toothbrush. When a user inserts such a brush head, *i.e*. the free end portion, into his mouth he is liable to regard this as uncomfortable. In order to limit the size of the free end portion of a electric toothbrush in such a way that the user will not feel uncomfortable the gear ratio should be approximately 1:1. In other words, in order to enlarge the reversing angle of a brush head, the drive shaft should be given a large reversing angle without the gear ratio being increased.

GB-A 2,212,570 describes a example of a electric toothbrush whose free end portion is of a construction which enables a large reversing angle of the brush head to be obtained. In this construction two pinions are mounted on a spindle of a brush head and a drive wheel is mounted on a drive shaft to which a driving torque of a motor is transmitted. The drive wheel has teeth which periodically and alternately mesh with the respective pinion as the drive shaft rotates. These teeth have been provided only on a part of the periphery of the drive wheel. As a result, when these teeth are in mesh with one pinion the other pinion will be disengaged. When the drive wheel drives one pinion to rotate the brush head in a positive direction and the drive wheel and one pinion are disengaged from one another the teeth of the drive wheel will be in mesh with the other pinion to rotate the spindle of the brush head in a reverse direction. Subsequently, as the rotation of the drive wheel proceeds, the pinions will be driven alternately, causing the brush to be perform a reciprocatory rotation.

Generally, the free end portion of a electric toothbrush should be comparatively small because it is to be inserted into the mouth. On the other hand, as outlined above, a brush head should have a large reversing angle in order to achieve effective brushing. If these problems are to be solved by means of a mechanism accommodated in the free end portion of an electric toothbrush such a mechanism will become complicated and, furthermore, the number of parts of the mechanism will increase. Since the size of the free end portion is limited a precise process technology is required if the number of parts is to be increased. In fact, a tooth of a gear wheel becomes so small that a sophisticated process technology and assembly technology will be required. When a tooth of a gear wheel is small it tends to break off at its root. Moreover, when a tooth of a gear wheel wears irregularly the drive of a electric toothbrush is likely to become irregular. In other words, it is not unlikely that the toothbrush rapidly deteriorates. Therefore, a mechanism accommodated in a free end portion of a electric toothbrush should be simple in order to realise a compact electric toothbrush having long life. In order to simplify a mechanism to be accommodated in a free end portion and to obtain a large reversing angle of the brush head it is therefore necessary to enlarge the reversing angle of the drive shaft. However, generally the maximum reversing angle of a drive shaft is approximately 60° to 70°.

Therefore, it is an object of the invention to provide a motion converting mechanism of a electric toothbrush in which the drive shaft for transmitting a driving torque of a motor to the brush head has a large reversing angle so that a large reversing angle of the brush head can be obtained without the use of a intricate mechanism in the free end portion of the electric toothbrush. It is another object of the invention to provide a motion converting mechanism which can be used in a electric toothbrush having a non-round brush head.

To this end the invention is characterized in that it comprises: an output wheel connected to a drive shaft for transmitting a driving torque to a brush head and having two sets of recesses extending from a peripheral surface toward the drive shaft;
a first control wheel carrying one set of pins for engagement with one set of recesses and arranged to be rotatable, in such a manner that said one set of pins alternately engages with and is disengaged from said one set of recesses at given intervals; and
a second control wheel carrying another set of pins for engagement with the other set of recesses and arranged to be rotatable in a direction opposite to that of the first control wheel, in such manner that the other set of pins alternately engages with and is disengaged from the other set of recesses at given time intervals but shifted in time with respect to the first control wheel. The first and the second control wheel, which each rotate in a given direction, enable the output wheel to be driven in an alternating fashion.

The invention is further characterized in that the one set of recesses comprises a first and a second recess;
in that the other set of recesses comprises a third and a fourth recess; in that the angle between the first recess and the second recess and the angle between the third recess and the fourth recess, respectively, is smaller than 90°; and in that the first and the third recess, and the second and the fourth recess, respectively, are disposed symmetrically with respect to the drive shaft. The instants at which the set of pins on the first control wheel engage the first and the second recess and the instants at which the other set of pins on the second control wheel engage the third and the fourth recess do not coincide.

The invention is further characterized in that it comprises a pinion for rotation in accordance with the driving torque of a motor and an idler wheel for rotation in a direction opposite to that of the pinion and with the same speed as the pinion, the first control wheel, which meshes with the pinion, and the second control wheel, which meshes with the idler wheel, being rotated with mutually the same speed. When the pinion is driven the first and the second control wheels are driven with the same speed in mutually different directions.

The invention also relates to an electric toothbrush comprising a motion converting mechanism having the features defined above.

The invention will now be described in more detail, by way of example, with reference to the drawings, in which
Fig. 1 is a general view of an electric toothbrush in accordance with the invention,
Fig. 2 shows a motion converting mechanism in accordance with the invention,
Fig. 3 is a side view of the motion converting mechanism in accordance with the invention, and
Fig. 4 is a underneath view of the motion converting mechanism in accordance with the invention.

An electric toothbrush 1 comprises a handle part 2 and a brush part 3 mounted on the handle part 2.

The handle part 2 accommodates a motor 4, a motion converting mechanism 5, a battery 6 and a switch 7. The motor 4 is coupled to the motion converting mechanism 5 by an input shaft 8. A drive shaft 9 disposed inside the brush part 3 is coupled to the motion converting mechanism 5. A gear wheel 10 is mounted on a free end of the drive shaft 9. Another gear wheel 11 for driving a brush head 12 is in mesh with the gear wheel 10.

When the switch 7 in this electric toothbrush 1 is turned on the motor 4, which is electrically powered by the battery 6, is started. A driving torque of the motor 4 is transmitted to the motion converting mechanism 5 by the input shaft 8. The motion converting mechanism 5 transmits the driving torque of the input shaft 8, which rotates in a fixed direction, to the drive shaft 9 in such a way that the drive shaft 9 performs a reversing motion (oscillation) through a predetermined angle. When the drive shaft 9 performs a reversing motion the brush head 12 also performs a reversing motion *via* the gear wheels 10 and 11. When the gear ratio between the gear wheels 10 and 11 is 1:1 the brush head 12 will perform a reversing motion through the same angle as the reversing motion of the drive shaft 9.

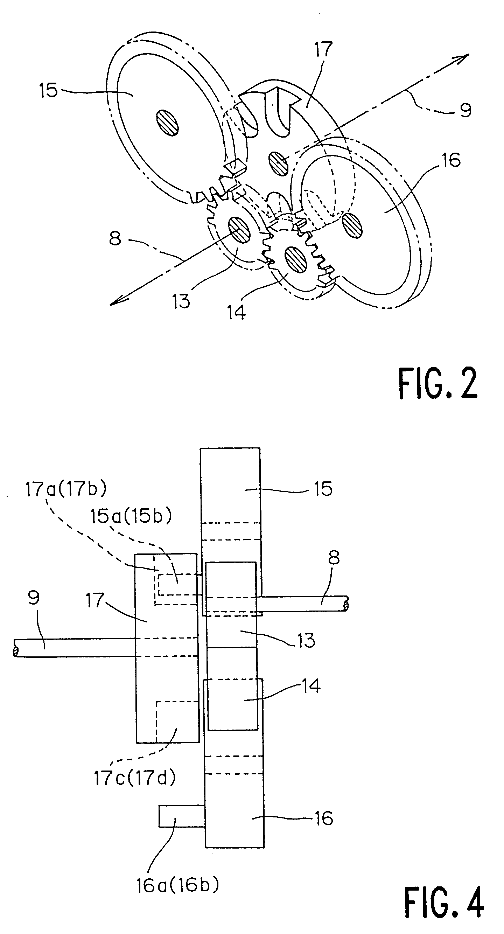

Fig. 2 shows the motion converting mechanism 5 viewed from the side of the input shaft 8. An idler wheel 14 has the same diameter as a pinion 13 meshing therewith. The pinion 13 is also in mesh with a first control wheel 15 and the idler wheel 14 is in mesh with a second control wheel 16 having the same diameter as the first control wheel 15. The respective wheels are arranged in such a way that a line between the axis of the pinion 13 and the axis of the idler wheel 14 and another line between the axis of the first control wheel 15 and the axis the second control wheel 16 extend parallel to one another. The motion converting mechanism 15 further comprises an output wheel 17 whose axis is centred relative to the axis of the first control wheel 15 and that of the second control wheel 16.

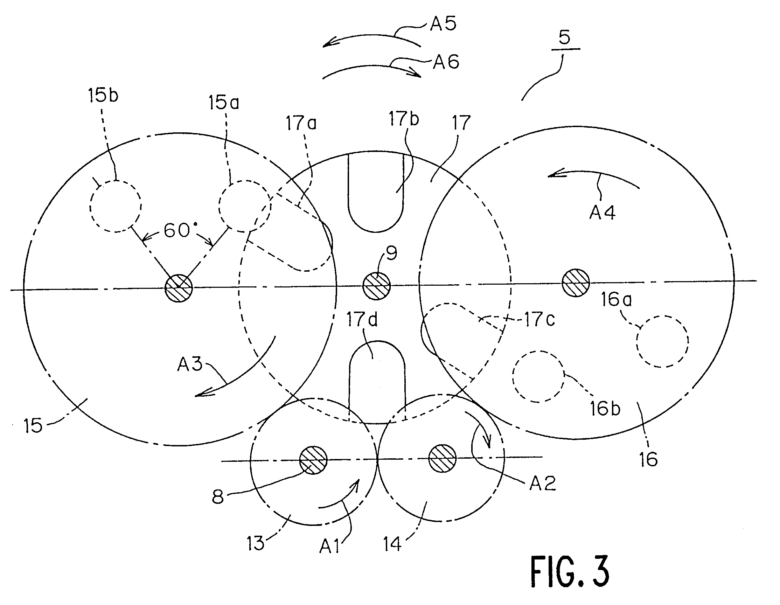

Fig. 3 shows the motion converting mechanism 5 seen from the side of the input shaft 8, *i.e*. from the side of the motor 4.

As is shown in Fig. 3, at its rear the first control wheel 15 carries one pair of pins, *i.e*. a first pin 15a and a second pin 15b. At its rear the second control wheel 16 carries another pair of pins, *i.e*. the third pin 16a and the fourth pin 16b. At its front the output wheel 17 has one pair of recesses, *i.e*. a first recess 17a and a second recess 17b, with which the first pin 15a and the second pin 15b are engageable, and another pair of recesses, *i.e*. a third recess 17c and a fourth recess 17d, with which the third pin 16a and the fourth pin 16b are engageable.

In the present embodiment the respective angles between the first pin 15a and the second pin 15b, and the third pin 16a and the fourth pin 16b are 60°. Accordingly, the angle between the first recess 17a and the second recess 17a, with which the first pin 15a and the second pin 15b are engageable, and the other angle between the third recess 17c and the fourth recess 17d, with which the third pin 16a and the fourth pin 16b are engageable, are 60°.

Rotation phases of the first control wheel 15, the second control wheel 16 and the output wheel 17 are such that the instants at which the first and second pins 15a and 15b engage the first and second recesses 17a and 17b and the instants at which the third and fourth pins 16a and 16b engage the third and fourth recesses 17c and 17d alternately succeed one another. The motor 4 is always stopped in the same position, for example, in the position in which the first pin 15a has engaged the first recess 17a, so that the rotation phase (reversing phase) of the output wheel 17 is always the same when the motor is started.

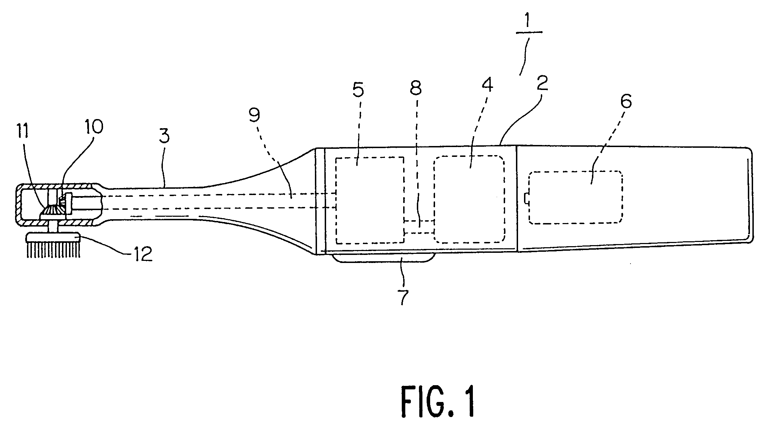

Fig. 4 shows the motion converting mechanism 5 seen from the side of the switch 7 in Fig. 1. As is shown in Fig. 4, in which the rotation phase of each wheel is such that when both the first and the second pin 15a and 15b of the control wheel 15 have engaged the first and the second recess 17a and 17b of the output wheel 17 both the first and the second pin 16a and 16b of the second control wheel 16 are disengaged from the third and the fourth recess 17c and 17d of the output wheel 17.

The operation of the motion converting mechanism of the electric toothbrush in accordance with the invention will now be explained in detail hereinafter.

Firstly, it is assumed that the pinion 13 is driven by the input shaft 8 and rotates in a direction indicated by an arrow A1. In conformity with the rotation of the pinion 13 the idler wheel 14 rotates in a direction indicated by an arrow A2. Moreover, in conformity with said rotation of the pinion gear 13 the first control wheel 15 rotates in a direction indicated by a arrow A3, and in conformity with the rotation of the idler 14 the second control wheel 16 rotates in a direction indicated by an arrow A4.

When the first control wheel 15 rotates the first pin 15a engages the first recess 17a of the output wheel 17, so that the output wheel 17 rotates in a direction indicated by an arrow A5. When the first control wheel 15 and the output wheel 17 have rotated through approximately 60° after engagement of the first pin 15a with the first recess 17a the second pin 15b engages the second recess 17b and the first pin 15a is disengaged from the first recess 17a.

Furthermore, when the first control wheel 15 and the output wheel 17 have rotated through approximately 60° the second pin 15b is disengaged from the second recess 17b. Then, the third pin 16a of the second control wheel 16 engages the third recess 17c of the output wheel 17 and the output wheel 17 rotates in an opposite direction, *i.e*. in a direction indicated by an arrow A6. When the second control wheel 16 and the output wheel 17 have rotated through approximately 60° after the third pin 16a has engaged the third recess 17c the fourth pin 16b engages the fourth recess 17d and the third pin 16a is disengaged from the first recess 17c. Moreover, when the second control wheel 16 and the output wheel 17 have rotated through approximately 60° the fourth pin 16b is disengaged from the fourth recess 17d. Subsequently, the output wheel 17 is driven alternately in accordance with the rotations of the first and the second control wheel 15 and 16.

The output wheel 17 is driven by the first control wheel 15 and the second control wheel 16, respectively, and is rotated in different directions through approximately 120° in total. Thus, the output wheel 17 performs a reversing motion (oscillation) through 120°. Likewise, the drive shaft 9 performs a reversing motion of 120°, as a result of which the brush head 12 also performs a reverse motion of 120°.

This results in a reversing motion through a large angle for a drive shaft for transmitting a driving torque of a motor to a brush head, thereby enabling a large reversing angle to be obtained for the brush head 12.

The invention is not limited to the above embodiment. In the present embodiment the brush head, by way of example, has a round shape and performs a rotating motion (reversing motion). However, the invention can be easily applied to a electric toothbrush whose brush head has a rectangular shape. The brush head (toothbrush) is then moved in upward and downward directions (rolling) in accordance with a reversing motion of the drive shaft 9. However, a reversing angle of 120° is too large for moving the brush head in upward and downward directions. In such a case the first control wheel 15 and the second control wheel 16 can be spaced further apart to reduce the angle between the first pin 15a and the second pin 15b and the angle between the third pin 16a and the fourth pin 16b. Obviously, the angle between the first recess 17a and the second recess 17b and the angle between the third recess 17c and the fourth recess 17d should then be small. As a result, the reversing angle for upward and downward movement can then be small.

In the present embodiment the output wheel 17, by way of example, has two recesses. However, the number of recesses is not limited to two. Alternatively, the number of recesses may be one or three, or more than three. The number of pins provided on the control wheel should then be one or three or more than three in accordance with the number of recesses in the output wheel.

Moreover, the invention can be applied to any device other than an electric toothbrush, in which a large reversing angle for a reversing motion is required.

The motion converting mechanism in accordance with the invention enables a large angle for a reversing motion of a drive shaft for transmitting a driving torque of a motor to a brush head to be obtained without any special provision on the free end portion of a toothbrush, and it enables the brushing efficiency to be improved without a feeling of discomfort when the brush head is inserted into the mouth. Moreover, the invention can be easily applied to a electric toothbrush having a brush head of a non-round type.

## Claims

1. A motion converting mechanism for a electric toothbrush, characterized in that it comprises:
a output wheel connected to a drive shaft for transmitting a driving torque to a brush head and having two sets of recesses extending from a peripheral surface toward the drive shaft;
a first control wheel carrying one set of pins for engagement with one set of recesses and arranged to be rotatable, in such a manner that said one set of pins alternately engages with and is disengaged from said one set of recesses at given intervals; and
a second control wheel carrying another set of pins for engagement with the other set of recesses and arranged to be rotatable in a direction opposite to that of the first control wheel, in such manner that the other set of pins alternately engages with and is disengaged from the other set of recesses at given time intervals but shifted in time with respect to the first control wheel.

2. A motion converting mechanism for an electric toothbrush as claimed in Claim 1, characterized in that the one set of recesses comprises a first and a second recess;
in that the other set of recesses comprises a third and a fourth recess;
in that the angle between the first recess and the second recess and the angle between the third recess and the fourth recess, respectively, is smaller than 90°; and
in that the first and the third recess, and the second and the fourth recess, respectively, are disposed symmetrically with respect to the drive shaft.

3. A motion converting mechanism for a electric toothbrush as claimed in Claim 1 or 2, characterized in that it comprises a pinion for rotation in accordance with the driving torque of a motor and a idler wheel for rotation in a direction opposite to that of the pinion and with the same speed as the pinion, the first control wheel, which meshes with the pinion, and the second control wheel, which meshes with the idler wheel, being rotated with mutually the same speed.

4. An electric toothbrush comprising a motion converting mechanism as claimed in Claim 1, 2 or 3.
